# EUROPEAN PATENT SPECIFICATION

(11) **EP 0 379 668 B1**
(45) Date of publication and mention of the grant of the patent: **15.02.1995**
(21) Application number: 89121599.8
(22) Date of filing: 23.11.1989
(51) Int. Cl.: A61C 7/12

(54) **Orthodontic appliance**
Orthodontische Vorrichtung
Appareil orthodontique

(30) Priority: 26.01.1989 JP 18345/89
(43) Date of publication of application: 01.08.1990
(73) Proprietor: Suyama, Hajime, Miyazaki-shi Miyazaki (JP)
(72) Inventor: Suyama, Hajime, Miyazaki-shi Miyazaki (JP)
(74) Representative: Patentanwälte Lippert, Stachow, Schmidt & Partner

(56) References cited:
- AU-A- 490 821
- DE-A- 2 554 145
- US-A- 4 536 154
- US-A- 4 676 747
- US-A- 4 799 882

## Description

The present invention relates to an orthodontic appliance for correcting misaligned teeth.

A typical orthodontic appliance comprises a plurality of brackets to be fixed to the surfaces of teeth and a metal wire for connecting these brackets to each other along the direction of a set of teeth.

As the bracket used for the appliance of this type, there has been known a so-called "edge-wise bracket" comprising a base plate and a pair of wire supports which are disposed along the two lateral ends of the base plate and which define a square groove recessed laterally into the center of each support.

For correcting misaligned teeth by using the orthodontic appliance described above, for instance a first premolar just behind a canine is extracted to make room and then the bracket is fixed to the surface of each of the teeth. Then a wire is laterally extended under tension through the groove of each bracket and both ends of the wire are fixed to a pair of first molars. Further a rubber band is stretched between the brackets appended to the canine and the first molar.

Thus, the bracket fixed to the tooth and the wire move slidingly relative to each other to correct the misaligned teeth with lapse of time.

However, correction of the misaligned teeth actually takes a considerable period of time, because the relative movement between the wire support of the bracket and the wire is not smooth.

The US No. 4,799,882 discloses an orthodontic bracket of the edge-wise type including a single tie wing having a labially facing archwire slot and a scoopout or pocket along the archwire slot axis formed so that the archwire slot is interrrupted centrally of the tie wing so as to reduce the friction between the archwire and the bracket along the longitudinal axis of the archwire. The scoopout or pocket defines spaced archwire slot segments, each segment including opposed curvelinear or convex walls that define line contact with the archwire and even further reduce sliding friction between the bracket and archwire. In the single wing type bracket, since the frictional resistance between the archwire and the wall of the groove (slot) is caused along the entire length of the groove, this hinders the smooth relative movement between them.

The Australian patent specification No. 490 821 also discloses a so-called single wing type bracket. This bracket is provided with a channel for accomodating the archwire in contact with the base of the channel, the base of the channel being bow-shaped in the longitudinal direction of the channel to permit substantially unimpeded relative movement of the bracket with respect to the archwire. The provision of a bow-shaped channel base ensures that the archwire bears against the curved central portion of the base at all times, even if not at precisely the same point.

Incidently, since the appearance of a patient with brackets on his teeth is not very good, it is desirable to shorten the period of tooth correction.

Considering that one of major factors which extends the correction period is friction between the recessed grooves and the connection wire, the present inventor has studied how to reduce this friction.

It is therefore an object of the present invention to provide an orthodontic appliance in which the friction between the recessed grooves and the connection wire is even more reduced than in known appliances.

The foregoing object of the present invention can be attained by an orthodontic appliance for correcting misalinged teeth comprising a plurality of brackets each secured to a surface of a tooth and a wire for connecting said plurality of brackets to each other, in which each of said brackets comprises:
a base plate to be attached at one surface to the surface of the tooth,
a pair of wire supports which are disposed at the other surface of said base plate while being spaced apart from each other in the longitudinal direction of the wire to be supported and each of which defines a groove which is aligned horizontally and labially open for passing the wire slidably along the set of teeth,
wherein the groove includes opposed sidewalls and a bottom wall,
the inner surface of the bottom wall is protruded convexly towards the labial opening of the groove to define a first outwardly curved wire engaging surface extending between said opposing sidewalls and having a longitudinal axis transverse to the longitudinal direction of the wire and
the inner surface of each side wall is protruded convexly in the direction towards the opposing sidewall, respectively, to define second outwardly curved wire engaging surfaces extending labially from the bottom wall and having a longitudinal axis transverse to the longitudinal direction of the wire.

Preferably, the longitudinal axis of said first outwardly curved wire engaging surface and the longitudinal axes of said second outwardly curved wire engaging surfaces are aligned within a common plane.

Said first outwardly curved wire engaging surface may have an apex extending between said opposing sidewalls and positioned on the longitudinal axis of the first outwardly curved wire engaging surface, and each of said second outwardly curved wire engaging surfaces may also have an apex extending labially from the bottom wall and positioned on their corresponding longitudinal axis.

The curved surface may be in the form of an arc or in the form of an arc whose crest is partially flattened.

Since the bracket and the wire can be brought into point-to-point contact with each other at the protruded curved surface of the groove, the wire can slide smoothly along the grooves in the bracket bonded to each of the teeth and the period required for correcting the misaligned teeth can be reduced remarkably.
- Fig. 1: is a perspective view of a conventional bracket used in an orthodontic appliance for correcting misaligned teeth;
- Fig. 2: is a front elevational view showing a state wherein the bracket is bonded and fixed to the surface of a tooth;
- Fig. 3: is an explanatory view showing a state of correction;
- Fig. 4: is a perspective view of a bracket used in an orthodontic appliance according to the present invention;
- Fig. 5: is a front elevational view showing a state wherein the bracket of fig. 3 is bonded and fixed to the surface of a tooth;
- Fig. 6: is a cross sectional view taken along the line VI - VI of Figure 4;
- Figure 7: is a front elevational view where a square-sectioned wire is passed through the grooves of the brackets; and
- Fig. 8: is an enlarged cross sectional view illustrating bottom wall of a modified bracket.

### DESCRIPTION OF THE PREFERRED EMBODIMENTS

Preferred embodiments of the present invention will be described in details in comparison with a conventional appliance while referring to the accompanying drawings.

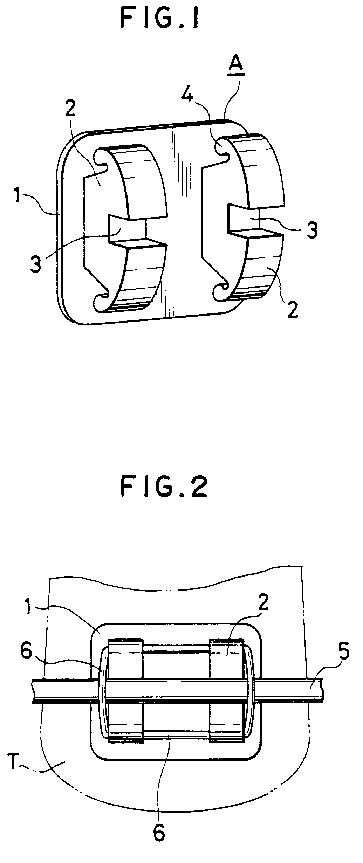

At first a conventional orthodontic appliance is to be outlined referring to Fig. 1 through Fig. 3.

An edgewise bracket A shown in Fig. 1 comprises a base plate 1 and a pair of wire supports 2 and 2 each of which is disposed along the lateral end of the base plate 1. A square groove 3 is recessed laterally into the center of each wire support 2.

An example of operation for correcting a misaligned teeth using the bracket A will now be described briefly.

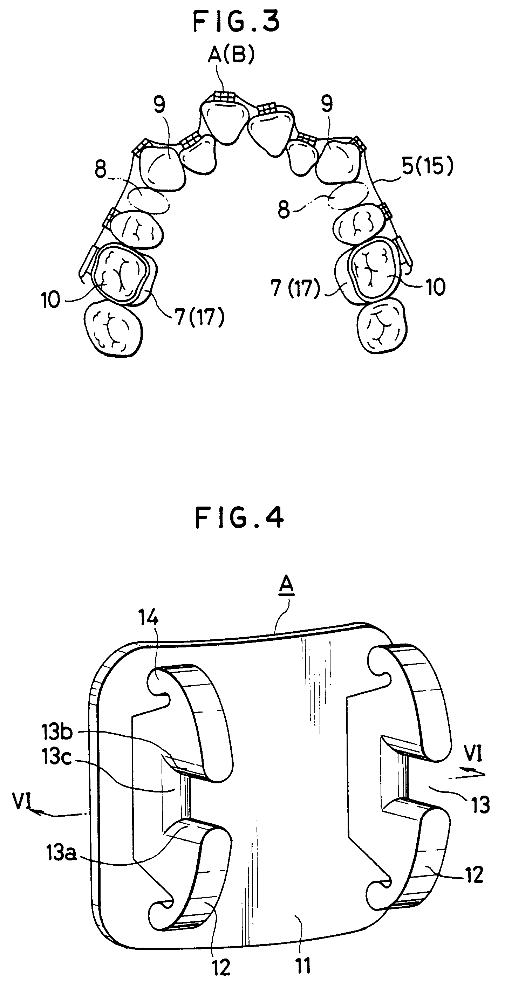

Teeth become irregular when the jaw is too small for all of the teeth to erupt neatly, so they push and shove against each other. In order to correct such misaligned teeth, a first premolar 8 just behind a canine 9 is extracted to make room for the other teeth to be forced into place (refer to Fig. 3).

After the first premolar 8 is extracted, a plurality of the brackets A, A --- are bonded and fixed to the surfaces of predetermined teeth. Subsequently, a round wire 5 made of stainless steel is laterally extended under tension through the groove 3 of each of the brackets A and both ends of the wire 5 are fixed to bands 7 which are wound around a pair of first molars 10 respectively (on the right and left sides). The round wire 5 is urged by a fixing wire 6 to the bracket A so that the wire 5 can not come out of the grooves 3 (refer to i Figure 2).

Once the brackets A and the round wire 5 are thus attached, each of the teeth is moved by the elastic force of the round wire 5 with the lapse of time so that irregularities along the direction of tooth thickness (hereinafter referred to as the thickness direction) are corrected.

Although the space formed by the extraction of the tooth is somewhat reduced by this process, it can not since be completely closed only by that. Therefore, in order to close the gap in the teeth in the direction along the set of teeth (hereinafter simply referred to as the lateral direction), a rubber band (not illustrated) is stretched between the bracket A which is bonded and fixed to the canine 9 and the band 7 which is wound around the first molar 10 to move the canine 9 toward the first molar 10 by the elastic force of the rubber band. In this case, since the round wire 5 slides along the grooves 3 of the bracket A which is bonded and fixed to the canine 9, the canine 9 is moved toward the first molar 10, or vice versa.

However, correction of the misaligned teeth by the appliance in the prior art requires, a considerable period as described above.

This is attributable to the friction between the round wire 5 and the inner wall of the groove 3 of the bracket 1, which hinders smooth sliding between them.

Then, it is intended in the present invention to reduce the friction between the outer circumference of the wire and the inner wall surface of the groove as less as possible, thereby enabling smooth movement of the teeth.

### EXAMPLE

Examples of the present invention will be described below with reference to preferred embodiments shown in Fig. 4 through Fig. 8.

As shown in Fig. 4, a bracket B comprises a base plate 11 for bonding and fixing to the surface of a tooth and a pair of wire supports 12 and 12 each of which is disposed along the lateral end of the base plate 11.

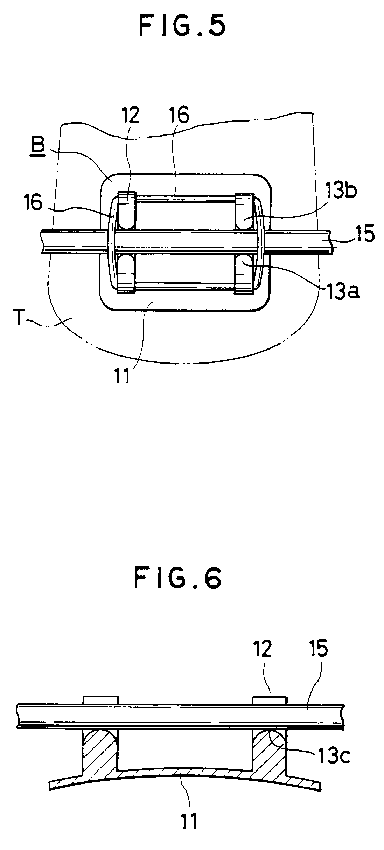

The entire base plate 11 is curved slightly so that it can fit against the surface of the tooth (refer to Fig. 6). A groove 13 is recessed laterally in the central portion of each wire support 12 (refer to Fig. 4), and a round wire 15 is passed through the groove 13. A stopping hook 14 extends from each end upper of the wire support 12. A fixing wire 16 is firmly set to the bracket B while being passed beneath the stopping hook 14 and over the upper surface of the round wire 15 to fix the latter (refer to Fig. 5).

In this embodiment, each of the inner side walls 13a and 13b of the groove 13 has a semi-circular cross section. More in particular, in the cross section shown in Fig. 5, each of the side walls 13a and 13b is formed into such a convex protruding to the inside of the groove 13 relative to the direction of the wire passage, so that the round wire 15 is brought into point-to-point contact with each of the side walls 13a and 13b of the grooves at the crest thereof 13 when the round wire 16 is laterally passed through the groove 13.

In addition, the bottom surface 13c of each groove 13 also has a semi-circular shape i.e., a semi-cylindrical form extended between the walls 13a and 13b. More in particular, in the cross section shown in Fig. 6, the bottom wall 13c is formed into such a cnvex protruding to the inside of the groove 13 relative to the direction of the wire passage, so that the round wire 15 is also brought into point-to-point contact with the bottom surface 13c of each groove 13.

Now the operation of the illustrated embodiment will be explained.

As shown in Fig. 3, i.e., in the same way as in the conventional bracket described above, after a first premolar 8 is extracted, the bracket B is bonded and fixed to the surface of each of predetermined teeth by using a resin type adhesive. Subsequently, a round wire 15 is stretched laterally through the grooves 13 of each of the brackets B, and both ends of the wire 15 are fixed to bands 17 which are wound around the first molars 7 respectively (on the right and left sides).

In this case, the round wire 15 is prevented from coming out of the groove 13 by the fixing wire 16 that is firmly wound around the bracket B in such a manner that it presses against the upper surface of the round wire 15 and is passed below the stopping hooks 14.

Finally, a rubber band (not illustrated) is stretched between the bracket B which is bonded and fixed to the canine 9 and the band 17 which is wound around the first molor 10.

When the appliance is thus attached, the teeth are moved by the elastic force of the round wire 15 to straighten irregularities in the thickness direction, and the canine 9 is moved toward the first molar 10 by the elastic force of the rubber band to completely close the gap formed by extracting the tooth. Since the round wire 15 can slide along the grooves 13 of the bracket B which is bonded and fixed to the canine 9, the canine 9 is moved toward the molar 10.

In this case, since the inner surfaces of both of the side walls 13a and 13b and the bottom wall 13c of each groove 13 recessed in the wire supports 13, 14 are circularly curved, the outer circumference of the round wire 15 and the inner circumference of the grooves 13 are brought into point-to-point contact with each other.

Frictional resistance can thus be greatly reduced when compared with the conventional case, in which the wire has been brought into sliding contact over the entire lateral length of the inner wall of the groove. Accordingly, the round wire 15 can slide smoothly along the grooves 13 of the bracket B, which can remarkably shorten the period required for the correction of misaligned teeth.

In the embodiment of the present invention being thus constituted, since the groove in the bracket B and the round wire 15 can be brought into point-to-point contact with each other as described above and, accordingly, the round wire 15 can slide smoothly along the grooves 13 in the brackets B which are bonded and fixed to the respective teeth to be moved, the period required for correcting the misaligned teeth can be greatly reduced, the compared with the conventional case. Further, the present invention also has an effect that the grooves are less likely to become chipped because the surfaces of the grooves are smoothly curved, even when the bracket is made of ceramic or hard resin as is often used at present and which tends to chip easily.

In practical orthodontic operation for the correction of the misaligned teeth, a round wire of a smaller diameter has been used at an initial step of the operation and then the wire is successively replaced with wires of greater diameters for correcting vertical irregularity. Then, a square-sectioned wire is finally used for applying more effective correcting force.

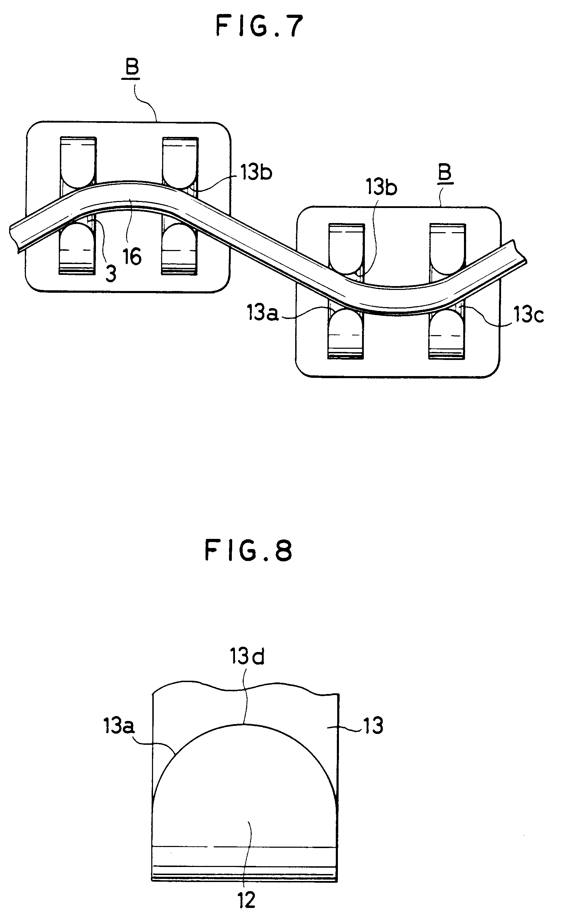

In the embodiment of the present invention, since the inner wall surface of each of the grooves recessed in the bracket is smoothly curved, even such a square-sectioned wire can be used already from the initial step of the operation, because the wire can be bent smoothly along the curved surface as shown in Fig. 7. It will be apparent that such a smooth bending of the square-sectioned wire is very much difficult along the flat-walled groove of the bracket B as shown in Fig. 1.

It is accordingly possible by the appliance of the present invention to use the square-sectioned wire at any step, for example, even at the initial step of the operation, thereby saving labors of replacing various kinds of wires and, thus, further shortening the correction period.

In the embodiment according to the present invention, the correction period can be shortened, while different depending on the cases, by about 20 to 30 % in average as compared with conventional cases.

The semi-circular cross-sectional shape of the inner groove walls 13a - 13c may be modified in any other form so long as the friction between them and the wire can be reduced. For example, a semi-circular shape, the top of which is partially flattened may be used as shown at 13d in Fig. 8. Accordingly, "curved surface" in the present invention also include such a substantially curved surface.

## Claims

1. An orthodontic appliance for correcting misaligned teeth comprising a plurality of brackets each secured to a surface of a tooth and a wire (15) for connecting said plurality of brackets to each other, in which each of said brackets comprises:
a base plate (11) to be attached at one surface to the surface of the tooth,
a pair of wire supports (12) which are disposed at the other surface of said base plate (11) while being spaced apart from each other in the longitudinal direction of the wire (15) to be supported and each of which defines a groove (13) which is aligned horizontally and labially open for passing the wire (15) slidable along the set of the teeth,
wherein the groove (13) includes opposed sidewalls (13a, 13b) and a bottom wall (13c),
the inner surface of the bottom wall (13c) is protruded convexly towards the labial opening of the groove, to define a first outwardly curved wire engaging surface extending between said opposing sidewalls (13a, 13b) and having a longitudinal axis transverse to the longitudinal direction of the wire (15), and the inner surface of each sidewall (13a, 13b) is protruded convexly in the direction towards the opposing sidewall (13a, 13b) respectively to define second outwardly curved wire engaging surfaces extending labially from the bottom wall (13c) and having a longitudinal axis tranverse to the longitudinal direction of the wire (15).

2. An orthodontic appliance according to claim 1, characterized in that the longitudinal axis of said first outwardly curved wire engaging surface and the longitudinal axis of said second outwardly curved wire engaging surfaces are aligned within a common plane.

3. An orthodontic appliance according to claim 1, characterized in that said first outwardly curved wire engaging surface having an apex extending between said opposing sidewalls (13a, 13b) and positioned on the longitudinal axis of the first outwardly curved wire engaging surface, and each of said second outwardly curved wire engaging surfaces having an apex extending labially from the bottom wall (13c) and positioned on their corresponding longitudinal axis.

## Patentansprüche

1. Eine kieferorthopädische Vorrichtung für die Korrektur von versetzten Zähnen, bestehend aus einer Mehrzahl von Klammern, von denen jede auf der Oberfläche eines Zahnes befestigt ist, und einem Draht (15), um diese Mehrzahl von Klammern miteinander zu verbinden, wobei jede dieser Klammern aus
einer Basisplatte (11), die auf der Oberfläche dies Zahnes befestigt ist, und
einem Satz von Drahtträgern (12) besteht, die auf der anderen Seite der erwähnten Platte (11) angebracht sind und die in länglicher Richtung des Drahtes (15), den sie zu tragen haben, auseinander stehen und wobei jede eine Aussparung (13) besitzt, die horizontal ausgerichtet ist und die nach außen geöffnet sind, um den Draht (15) durchzuführen, der an den Zähnen vorbeigeführt wird,
wobei die Aussparung (13) aus gegenüberliegenden Seitenwänden (13a, 13b) und einer unteren Wand (13c) besteht, und
die innere Fläche der unteren Wand (13c) konvex in labialer Richtung der Öffnung der Aussparung gerichtet ist, um eine erste, nach außen gekrümmte Berührungsfläche für den Draht zwischen den erwähnten Seitenwänden (13a, 13b) zu bilden, die in axialer Längsrichtung transvers zur Längsrichtung des Drahtes (15) steht, und
die innere Fläche jeder Seitenwand (13a, 13b) konvex hervorsteht in Richtung der jeweiligen gegenüberliegenden Seitenwand (13a, 13b), um weitere, nach außen gekrümmte Berührungsflächen für den Draht darzustellen, die in labialer Richtung von der unteren Wand (13c) ausgehen und in axialer Längsrichtung transvers zur Längsrichtung des Drahtes (15) stehen.

2. Eine kieferorthopädische Vorrichtung nach Anspruch 1, **dadurch gekennzeichnet**, daß die axiale Längsrichtung der erwähnten ersten, nach außen gekrümmten Berührungsfläche für den Draht und die axiale Längsrichtung der erwähnten zweiten Berührungsflächen für den Draht in einer gemeinsamen Ebene liegen.

3. Eine kieferorthopädische Vorrichtung nach Anspruch 1, **dadurch gekennzeichnet**, daß die erste, nach außen gekrümmte Berührungsfläche für den Draht ihren höchsten Punkt zwischen den gegenüberliegenden Seitenwänden (13a, 13b) hat und in axialer Längsrichtung der ersten, nach außen gekrümmten Berührungsfläche für den Draht positioniert ist, und jede der erwähnten weiteren Berührungsflächen für den Draht den höchsten Punkt so hat, daß dieser in labialer Richtung von der unteren Wand (13c) ausgeht und in deren korrespondierenden axialer Längsrichtung positioniert ist.

## Revendications

1. Appareil d'orthodontie pour la correction de défauts d'alignement des dents, comprenant plusieurs crochets dont chacun est fixé à une surface d'une dent, et un fil métallique (15) qui relie entre eux ces multiples crochets, chacun desdits crochets comprenant:
une plaque de base (11) destinée à être attachée, par l'une de ses faces, à une surface de la dent,
une paire de supports (12) du fil métallique qui sent disposés sur l'autre face de ladite plaque de base (11) à distance l'un de l'autre dans la direction longitudinale du fil métallique (15) qu'ils supportent, et dont chacun comporte une rainure (13) qui est dans l'alignement horizontal de l'autre rainure et est ouverte du côte de la lèvre, pour que le fil métallique (15) y passe en pouvant glisser le long de la série des dents,
la rainure (13) présentant des parois latérales opposées (13a, 13b) et une paroi de fond (13c),
la surface interne de la paroi de fond (13c) étant en saillie convexe vers l'ouverture labiale de la rainure, pour définir une première surface courbe vers l'extérieur de contact avec le fil métallique, qui s'étend entre lesdites parois latérales opposées (13a, 13b) et dont l'axe longitudinal est perpendiculaire à la direction longitudinale du fil métallique (15), et la surface interne de chaque paroi latérale (13a, 13b) étant en saillie convexe en direction de la paroi latérale (13a, 13b) respectivement opposée, pour définir des secondes surfaces courbes vers l'extérieur de contact avec le fil métallique, qui s'étendent en direction de la lèvre à partir de la paroi de fond (13c) et dont l'axe longitudinal est perpendiculaire à la direction longitudinale du fil métallique (15).

2. Appareil d'orthodontie selon la revendication 1, caractérisé en ce que l'axe longitudinal de ladite première surface courbe vers l'extérieur de contact avec le fil métallique et l'axe longitudinal desdites secondes surfaces courbes vers l'extérieur de contact avec le fil métallique sont alignés dans un plan commun.

3. Appareil d'orthodontie selon la revendication 1, caractérisé en ce que ladite première surface courbe vers l'extérieur de contact avec le fil métallique présente un sommet qui s'étend entre lesdites parois latérales opposées (13a, 13b) et est situé sur l'axe longitudinal de la première surface courbe vers l'extérieur de contact avec le fil métallique, et en ce que chacune desdites secondes surfaces courbes vers l'extérieur de contact avec le fil métallique présente un sommet qui s'étend en direction de la lèvre à partir de la paroi de fond (13c) et est situé sur l'axe longitudinal de la seconde surface correspondante.
